# EUROPEAN PATENT SPECIFICATION

(11) **EP 2 805 653 B1**
(45) Date of publication and mention of the grant of the patent: **08.07.2020**
(21) Application number: 13380021.9
(22) Date of filing: 24.05.2013
(51) Int. Cl.: A47J 36/32, A47J 43/04, A47J 44/00, G06F 16/00

(54) **Cooking appliance for the processing and preparing foods**
Kochgerät für die Bearbeitung und Zubereitung von Speisen
Appareil de cuisson pour le traitement et la préparation de produits alimentaires

(43) Date of publication of application: 26.11.2014
(73) Proprietor: Taurus Research and Development, SLU, 25790 Oliana (Lleida) (ES)
(72) Inventor: Trench Roca, Lluís, 08650 Sallent (Barcelona) (ES); Alet Vidal, Josep, 25790 Oliana (Lleida) (ES); Montraveta Montraveta, Fidel, 25790 Oliana (Lleida) (ES)
(74) Representative: Juncosa Miró, Jaime

(56) References cited:
- EP-B1- 1 561 409
- WO-A1-2008/112066
- DE-A1-102007 031 372
- US-A1- 2002 009 016

## Description

### Field of the Art

The present invention generally relates to a cooking appliance for processing and preparing foods, and more particularly to a cooking appliance comprising driving means for rotating blades inside a container for containing foods to be processed, heat energy transferring means arranged for heating the foods in the container, an electronic circuit for powering and controlling said driving means and heat energy transferring means which is controlled by an appliance microcontroller depending on instructions which are provided by a user through a user interface and contain cooking parameters; and a telecommunication interface for communicating the appliance with a communication network.

### Background of the invention

Communicating a cooking appliance having the indicated characteristics with a computing device for controlling the operation of the cooking appliance itself or for receiving instructions, such as a cooking recipe, by means of using a remote communication device is disclosed by documents US 5363746 A and US 6805312 B2.

In the two mentioned documents, the computing device used is a remote computing device which interacts through a telecommunication interface with a cooking appliance microcontroller which is what controls the control functions and determines the operation of the cooking appliance, for example, for controlling the temperature at which the cooking appliance must operate, the time or the speed at which the blades inside the container for containing foods must rotate.

EP 1561409 B1 describes a cooking appliance such as those mentioned above which includes, in addition to the mentioned appliance microcontroller, a second microcontroller associated with a telecommunication interface (remote two-way link) where relevant data of the cooking appliance itself is sent from the appliance microcontroller to the second microcontroller and from the second microcontroller to an external evaluation appliance, which can be a mobile telephone or a PDA or similar device with an infrared interface for assessing the essential functions and for complementing and/or changing the received data. The second microcontroller includes a non-volatile memory in which said relevant data is recorded.

WO 2008/112066 discloses a programmable blender having record and playback features including a record mode and a playback mode. When the blender is placed into the record mode, a processor stores a user created blending sequence to a memory unit. Alternatively, when the blender is placed into a playback mode, the processor automatically controls the operation of the blender in accordance with the stored blending sequence. In an embodiment a data interface is provided to allow selected blending sequences to be transferred to a data interface maintained by a remote computing device via a bidirectional data link allowing communicating one or more blending sequences between the blender and the remote computing device.

WO 2011/069833 discloses a kitchen appliance having all the features of the preamble of claim 1.

As of today, however, there is no known cooking appliance with a dedicated computing device integrated in or coupled to the cooking appliance itself, particularly a single computing device with several specialized microcontrollers for providing a multifunction user interface through a touch screen, establishing communication with the appliance microcontroller for inputting operating parameters and/or for receiving possible alarms or warnings.

The mentioned dedicated computing device according to this invention further has telecommunication means for communicating with the exterior through a communication network allowing the user to consult or retrieve any relevant information, particularly for cooking, using the mentioned user interface with a touch screen.

### Description of the Invention

Based on the foregoing, in the field of cooking appliances there is a general interest in being able to control such cooking appliances even remotely and/or such cooking appliances being able to receive instructions, such as instructions for a cooking recipe or operating parameters.

The invention is defined by a cooking appliance according to claim 1. The invention proposes an improvement in the conditions in which the appliance will be available for said operation control and even for maintenance, offering an interface through a multifunction touch screen which can also be used for viewing the mentioned visual or verbal instructions or showing a guide and even illustrative videos particularly with suggestions of the implementation of cooking recipes using, to that end, a dedicated computing device integrated in or coupled to the appliance itself. A multifunction interface is thereby provided between the user and the appliance based on the mentioned dedicated computing device which can store said instructions or part of those instructions or download them from a remote storage, including cloud-type solutions in real time at the user's request, interacting through the mentioned touch screen of the dedicated computing device.

To that end, the invention provides a cooking appliance for processing and preparing foods of the type conventionally comprising: a base structure on which a support suitable for holding a container containing foods to be processed is assembled; motorized driving means suitable for rotating detachable stirring or cutting means inside said container; heat energy transferring means suitable for heating said foods to be processed within the container; an electronic circuit for powering and controlling said driving means and heat energy transferring means which is controlled by an appliance microcontroller depending on instructions which are provided by a user through a user interface and contain cooking parameters; and a telecommunication interface for communicating the appliance with a communication network. An appliance of this class is described in EP 1731068 B1 belonging to the same applicant.

In a characteristic manner, and unlike the solutions previously known in the state of the art, in the proposed cooking appliance, said user interface and said telecommunication interface are integrated in a dedicated computing device integrated in or coupled to said appliance with access through a multifunction touch screen; said appliance microcontroller is suitable for receiving cooking parameters and/or programs from said dedicated computing device through a data bus, a serial bus or a parallel bus; and said dedicated computing device is suitable for displaying any anomaly detected by said appliance microcontroller through said multifunction touch screen.

According to the invention, said dedicated computing device is arranged in a front part on an inclined surface of a casing assembled on said base structure of the cooking appliance and preferably interacts with said communication network by means of wireless technology selected from WiFi, 3G, Bluetooth or any other similar communication standard.

In a characteristic manner, the dedicated computing device is a multiprocessor device, preferably a tablet PC type device. According to the invention, the appliance microcontroller comprises a multicontroller device, such that a first microcontroller is dedicated to the control functions of the cooking appliance, including supervision and anomaly indication, and a second microcontroller is dedicated to the mentioned data bus for exchanging information with the dedicated computing device.

According to another embodiment, the cooking appliance can comprise a non-volatile memory in which said instructions containing cooking parameters are stored.

According to another embodiment, the appliance allows access thereto and handling same and/or also allows providing said instructions through a remote user communication device, such as a mobile telephone, a smartphone, a tablet or a PC which will be communicated with the mentioned dedicated computing device and will access the mentioned appliance microcontroller through same.

Alternatively, said instructions containing cooking parameters can be retrieved by means of the communication interface from a memory accessible through said communication network. The instructions containing cooking parameters can be edited by said user, also being able to be memorized in said non-volatile memory of the dedicated computing device or in the memory accessible through the communication network.

Advantageously, these instructions containing cooking parameters can include the different steps of a cooking recipe, being able to create a library comprising the different cooking recipes. These cooking recipes can also be updated and/or shared with other users through different social networks either by means of the dedicated computing device itself through the communication network or by means of a dedicated computing device of a remote user.

In the proposed cooking appliance, the dedicated computing device can also include, according to an improvement of the invention, a voice recognition function for inputting operating instructions referring to said cooking appliance.

The user interface can also be customized by a user and the access thereof is generally performed by means of an account of said user and/or preferably by means of a password.

### Brief Description of the Drawings

The foregoing and other advantages and features will be better understood from the following detailed description of several embodiments in reference to the attached drawings, in which:
Fig. 1 is an axonometric view of the cooking appliance of the present invention according to one embodiment;
Fig. 2 is an axonometric view of the cooking appliance of the present invention according to another embodiment;
Fig. 3 is a block diagram referring to the communication of the dedicated computing device comprising different elements and/or communication units and the appliance microcontroller;
Fig. 4 is a graphical example of the different commands that can be displayed through the user interface (touch screen or a part thereof) of the present invention according to one embodiment;
Fig. 5 is a graphical example of how the user interface is accessed by means of an account of said user and/or preferably by means of a password according to one embodiment;
Fig. 6 is a graphical example of how a food recipe is edited or how the prepared dishes can be saved, and/or displayed or viewed.

### Detailed Description of several Embodiments

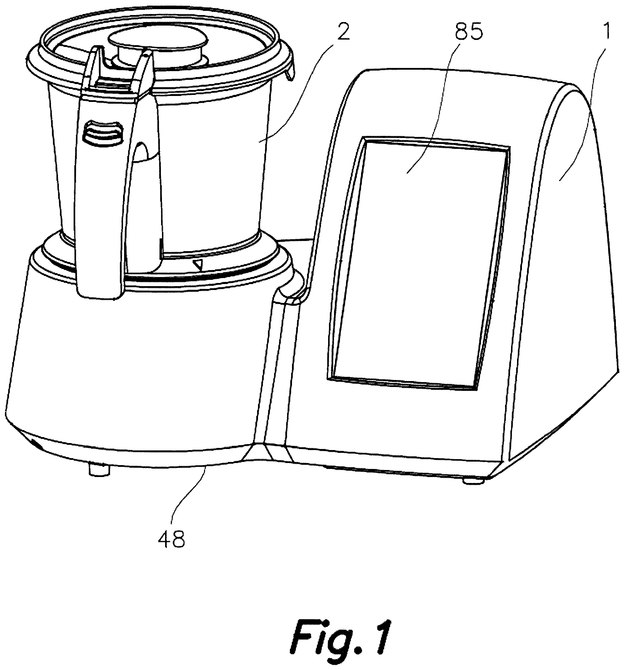

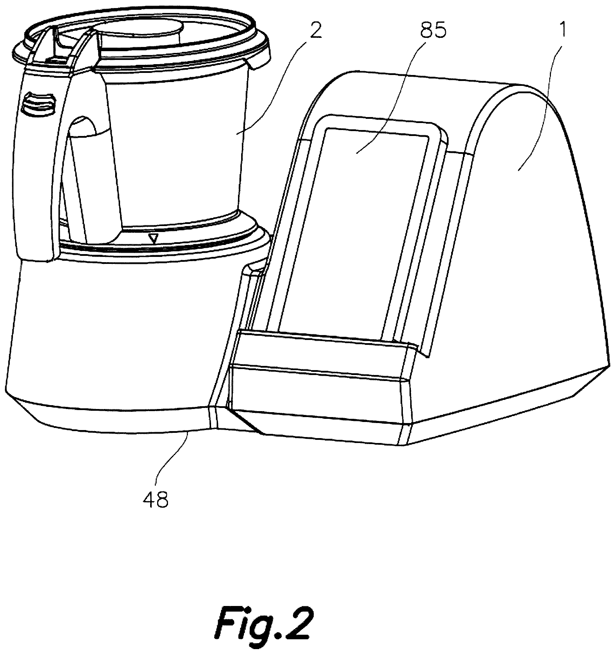

Fig. 1 and Fig. 2 show a cooking appliance for processing and preparing foods according to several embodiments of the present invention. The cooking appliance comprises a base structure 48 for holding a container 2 provided for containing foods to be processed or prepared. On said base structure 48 there is assembled a casing 1 having an opening through which the container 2 can be placed on or removed from a support. The casing 1, in a characteristic manner of the present invention, comprises a dedicated computing device 85 installed in a front part of said casing 1 either integrated therein (Fig. 1) or coupled thereto (Fig. 2) with access through a multifunction touch screen. In these shown embodiments, the dedicated computing device 85 integrates at least one user interface and a telecommunication interface for communicating the mentioned cooking appliance with a communication network, for example, the Internet. The cooking appliance also includes an enclosure in said casing 1 housing at least one electronic circuit for powering and controlling said driving means and heat energy transferring means which is controlled by an appliance microcontroller depending on instructions containing cooking parameters provided by a user through the computing device by means of the mentioned user interface.

According to the mentioned embodiments, Figs. 1 and 2, and in a characteristic manner of the present invention, the appliance microcontroller is responsible for receiving the instructions through a data bus (a series bus or a parallel bus), for example, the cooking temperature, the cooking time or the speed of rotation, and subsequently controlling the operation of the cooking appliance under this set point, also for sending alarm codes if the operation of the cooking appliance is not what is expected.

As indicated above, the communication of the cooking appliance with the communication network is performed by means of using the dedicated computing device 85 by means of using its several specialized processors. The interaction of the dedicated computing device 85 with the communication network either for controlling the communication of the cooking appliance with the network or for sending/receiving data through the same communication network, will preferably be performed by means of wireless technology such as WiFi technology, 3G technology, Bluetooth technology or any other similar standard technology.

Any anomaly detected by said appliance microcontroller due to the unexpected operation of the cooking appliance or erroneous functions thereof can also be displayed through the multifunction screen of the dedicated computing device 85.

The cooking appliance further comprises a non-volatile memory in which the mentioned instructions containing cooking parameters are preferably stored. Additionally, the mentioned instructions can be retrieved using, to that end, the mentioned telecommunication interface by means of using a memory accessible through the communication network. In other words, the appliance allows providing instructions from a cloud type infrastructure, for example.

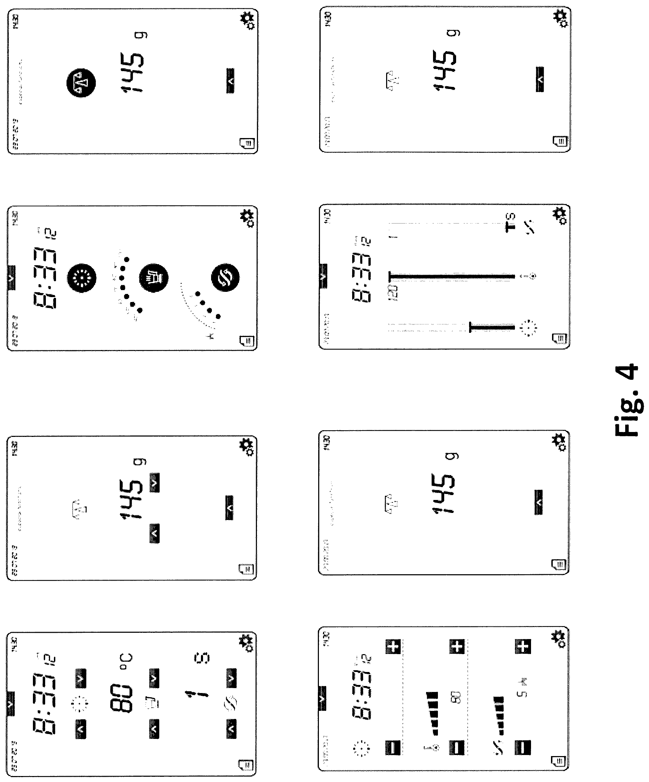

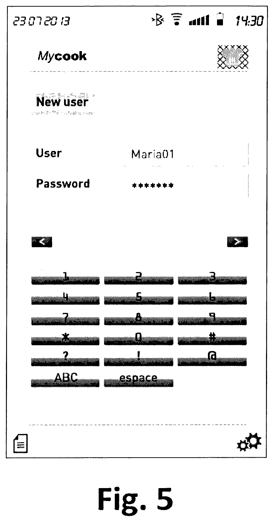

The mentioned user interface can be customized (Fig. 4), i.e., a specific user can choose what type of menus must be used or viewed or which instructions or how they must also be viewed for interacting with the cooking appliance by means of the appliance microcontroller. The configuration of the user interface also allows a vertical or horizontal depiction. The user interface is generally accessed by means of an account of said user and/or preferably by means of a password as can be observed in Fig. 5.

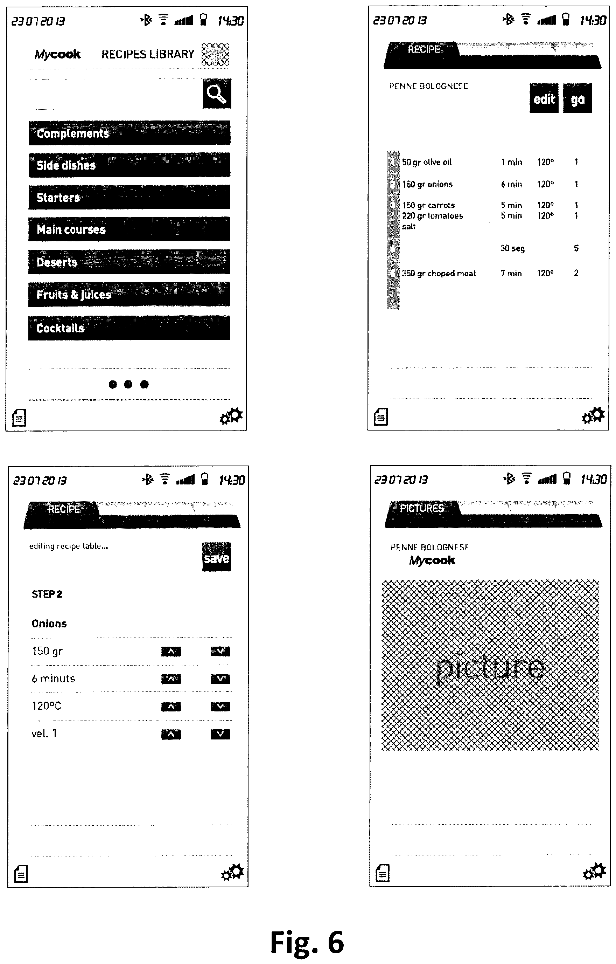

Advantageously and according to an improvement of the present invention, the instructions containing cooking parameters can be edited by said user (Fig. 6), also being able to be memorized in said non-volatile memory of the dedicated computing device 85 or in the memory accessible through the communication network (for example, the cloud). These instructions can include the different steps of a cooking recipe, being able to create a library comprising the different cooking recipes. These cooking recipes can also be updated and/or shared with other users through different social networks, for example, Facebook® or Twitter®, or through a blog either by means of using the dedicated computing device 85 itself or by means of a computing device of a remote user, for example, a smartphone, a PDA, a tablet or a PC, among others. Likewise, it will also allow access to the latest news. The images or videos of the final dishes can also be shared with other users.

The cooking appliance for cooking by means of using the dedicated computing device 85 can also include a voice recognition function for inputting operating instructions referring to said cooking appliance.

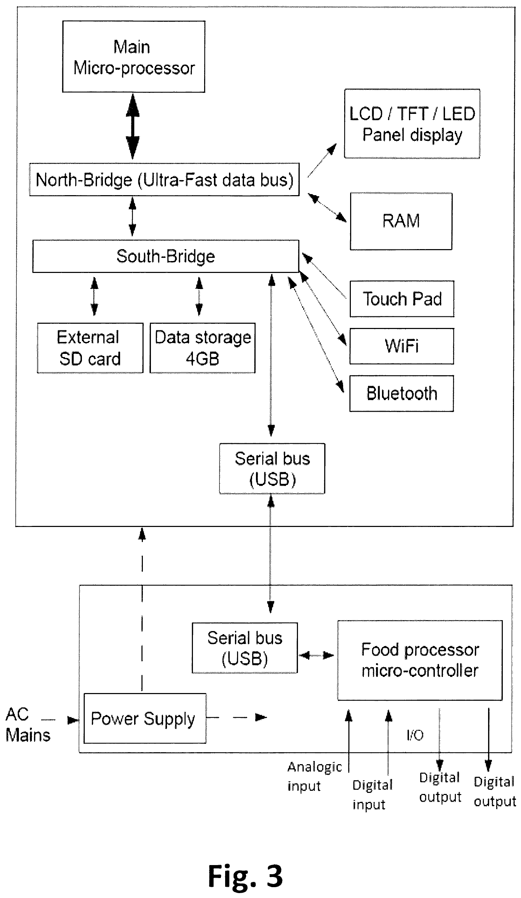

Fig. 3 details the different elements and/or units comprised by both the dedicated computing device 85 and the electronic circuit for powering and controlling the cooking appliance controlled by the appliance microcontroller according to one embodiment. Therefore, the electronics of the cooking appliance is primarily formed by the dedicated computing device 85 which in turn includes at least several specialized microprocessors and a non-volatile memory, and the electronic circuit for powering and controlling the cooking appliance controlled by the microcontroller, which in turn includes several microcontrollers.

According to a preferred embodiment, the dedicated computing device 85 used in the present invention is a tablet PC which can either be integrated in the casing 1 of the cooking appliance or can be coupled to said casing 1. According to an improvement of the present invention, if the tablet PC or dedicated computing device 85 is coupled to said casing 1 according to the embodiment of Fig. 2, said coupling can be a fixed coupling or a detachable coupling through a standard USB connector which will allow powering the tablet PC as well as transferring data at the same time.

The inclusion of the dedicated computing device 85 or tablet PC in the cooking appliance itself allows using multiple specialized microprocessors in a single cooking appliance, at the same time providing a user interface with the appliance microcontroller that is easy to view and to interact with since the dedicated computing device 85 itself includes all the operating controls of the cooking appliance. On the other hand, the cooking appliance has a microcontroller for controlling the operation of the cooking appliance in a single device.

The scope of the present invention is defined in the attached claims.

## Claims

1. A cooking appliance for processing and preparing foods, comprising:
a base structure (48) on which a support suitable for holding a container (2) containing foods to be processed is assembled;
motorized driving means suitable for rotating detachable stirring or cutting means inside said container (2);
heat energy transferring means suitable for heating said foods to be processed within the container (2);
an electronic circuit for powering and controlling said driving means and heat energy transferring means which is controlled by an appliance microcontroller depending on the instructions which are provided by a user through a user interface and contain cooking parameters; said appliance microcontroller being configured to receive cooking parameters and/or programs from a dedicated computing device (85) through a data bus; and
a telecommunication interface for communicating the appliance with a communication network,
**characterized in that**:
said appliance microcontroller comprises a multicontroller device and is further configured to detect any anomaly due to an unexpected operation of the cooking appliance or erroneous functions thereof via one of its microcontrollers;
said user interface and said telecommunication interface are integrated in said single dedicated computing device (85), with several specialized microcontrollers, installed in said appliance with access through a multifunction touch screen;
said single dedicated computing device (85) is either integrated or coupled in said cooking appliance, so that said touch screen is arranged in a front part on an inclined surface of a casing (1) assembled on said base structure (48) of said cooking appliance; and
said touch screen being for operation, control and/or maintenance of the cooking appliance including the display of any anomaly detected by the appliance microcontroller.

2. The cooking appliance according to claim 1, **characterized in that** said dedicated computing device (85) interacts with said communication network by means of wireless technology selected from WiFi, 3G or Bluetooth.

3. The cooking appliance according to claim 1, **characterized in that** it comprises a non-volatile memory in which said instructions containing cooking parameters are stored.

4. The cooking appliance according to claim 1, **characterized in that** said communication interface is enabled to retrieve instructions containing cooking parameters from a memory accessible through said communication network.

5. The cooking appliance according to claim 1, **characterized in that** said dedicated computing device (85) includes a voice recognition function for inputting operating instructions of the cooking appliance.

6. The cooking appliance according to claim 1, **characterized in that** said data bus is a serial bus.

7. The cooking appliance according to claim 1, **characterized in that** said data bus is a parallel bus.

8. The cooking appliance according to claim 1, **characterized in that** said user interface is customizable.

9. The cooking appliance according to claim 1 or 8, **characterized in that** said user interface is accessible by means of a user account and/or password.

10. The cooking appliance according to claim 1, 3 or 4, **characterized in that** said instructions containing cooking parameters can be edited by said user, said instructions containing cooking parameters being edited, memorized in said non-volatile memory of the dedicated computing device (85) or in the memory accessible through the communication network.

## Patentansprüche

1. Kochgerät zur Verarbeitung und Zubereitung von Speisen, umfassend:
eine Grundstruktur (48), auf der ein Rahmen zur Aufnahme eines Behälters (2), der zu verarbeitende Speisen enthält, aufgebaut ist;
motorisierte Antriebsmittel, die zum Drehen abnehmbarer Rühr- oder Schneidemittel im Inneren des genannten Behälters (2) ausgelegt sind;
Wärmeenergieübertragungsmittel, die zum Erhitzen der genannten zu verarbeitenden Speisen im Inneren des Behälters (2) ausgelegt sind;
eine elektronische Schaltung zur Spannungsversorgung und Steuerung der genannten Antriebsmittel und Wärmeenergieübertragungsmittel, die von einem Geräte-Mikrocontroller entsprechend der durch einen Benutzer über eine Benutzerschnittstelle gegebenen und Kochparameter enthaltenden Anweisungen gesteuert wird; wobei der genannte Geräte-Mikrocontroller so konfiguriert ist, dass er über einen Datenbus Kochparameter und/oder Programme von einer zugehörigen Recheneinrichtung (85) empfängt; und
eine Telekommunikationsschnittstelle zur Kommunikation des Geräts mit einem Kommunikationsnetz,
**dadurch gekennzeichnet, dass**:
Der genannte Geräte-Mikrocontroller eine Multicontroller-Vorrichtung umfasst und ferner so ausgelegt ist, dass er über einen seiner Mikrocontroller sämtliche Anomalien aufgrund eines unerwarteten Vorgangs des Kochgeräts oder fehlerhafter Funktionen desselben erkennt;
die genannte Benutzerschnittstelle und die genannte Telekommunikationsschnittstelle in der genannten einzelnen zugehörigen Recheneinrichtung (85) integriert sind, wobei mehrere spezifische Mikrocontroller in dem genannten Gerät untergebracht sind und der Zugriff auf diese über einen Multifunktionsberührungsbildschirm erfolgt;
die genannte einzelne zugehörige Recheneinrichtung (85) entweder in das genannte Kochgerät integriert oder derart mit diesem verbunden ist, dass der genannte Berührungsbildschirm in einem vorderen Teil auf einer geneigten Oberfläche eines auf der genannten Grundstruktur (48) des genannten Kochgeräts aufgebauten Gehäuses (1) angeordnet ist; und
der genannte Berührungsbildschirm zur Bedienung, Steuerung und/oder Wartung des Kochgeräts einschließlich der Anzeige sämtlicher durch den Mikrocontroller des Gerätes erfassten Anomalien dient.

2. Kochgerät nach Anspruch 1, **dadurch gekennzeichnet, dass** die genannte zugehörige Recheneinrichtung (85) mittels einer aus WLAN, 3G oder Bluetooth ausgewählten Drahtlostechnologie mit dem genannten Kommunikationsnetz interagiert.

3. Kochgerät nach Anspruch 1, **dadurch gekennzeichnet, dass** es einen nichtflüchtigen Speicher umfasst, in dem die genannten, Kochparameter enthaltenden Anweisungen gespeichert sind.

4. Kochgerät nach Anspruch 1, **dadurch gekennzeichnet, dass** die genannte Kommunikationsschnittstelle in der Lage ist, Anweisungen, die Kochparameter enthalten, aus einem über das genannte Kommunikationsnetz zugänglichen Speicher abzurufen.

5. Kochgerät nach Anspruch 1, **dadurch gekennzeichnet, dass** die genannte zugehörige Recheneinrichtung (85) eine Spracherkennungsfunktion zur Eingabe von Betriebsanweisungen für das Kochgerät beinhaltet.

6. Kochgerät nach Anspruch 1, **dadurch gekennzeichnet, dass** der genannte Datenbus ein serieller Bus ist.

7. Kochgerät nach Anspruch 1, **dadurch gekennzeichnet, dass** der genannte Datenbus ein paralleler Bus ist.

8. Kochgerät nach Anspruch 1, **dadurch gekennzeichnet, dass** die genannte Benutzerschnittstelle individuell anpassbar ist.

9. Kochgerät nach Anspruch 1 oder 8, **dadurch gekennzeichnet, dass** der Zugriff auf die genannte Benutzerschnittstelle über ein Benutzerkonto und/oder Passwort erfolgt.

10. Kochgerät nach Anspruch 1, 3 oder 4, **dadurch gekennzeichnet, dass** die genannten, Kochparameter enthaltenden Anweisungen durch den genannten Benutzer bearbeitet werden können, wobei die genannten bearbeiteten Anweisungen, die Kochparameter enthalten, in dem genannten nichtflüchtigen Speicher der zugehörigen Recheneinrichtung (85) oder in dem über das Kommunikationsnetz zugreifbaren Speicher gespeichert werden.

## Revendications

1. Un appareil de cuisson pour traiter et préparer des aliments comportant :
une structure de base (48) sur laquelle un support approprié pour soutenir un récipient (2) contenant des aliments à traiter est assemblé ;
un moyen d'entraînement motorisé approprié pour faire tourner des moyens détachables de brassage ou de tronçonnement à l'intérieur de ce récipient (2) ;
un moyen de transfert d'énergie thermique approprié pour chauffer ces aliments à traiter à l'intérieur du récipient (2) ;
un circuit électronique pour alimenter et contrôler ce moyen d'entraînement et moyen de transfert d'énergie thermique qui est contrôlé par un microcontrôleur d'appareil dépendant des instructions qui sont fournies par un utilisateur à travers une interface d'utilisateur et contient des paramètres de cuisson ; ce microcontrôleur d'appareil étant configuré pour recevoir des paramètres de cuisson et/ou des programmes à partir d'un dispositif informatique dédié (85) à travers un bus de données ; et
une interface de télécommunication pour communiquer l'appareil avec un réseau de communication ;
**caractérisé en ce que** :
ce microcontrôleur d'appareil comporte un dispositif multi-contrôleur et est en plus configuré pour détecter toute anomalie due à un fonctionnement inattendu de l'appareil de cuisson ou à des fonctions erronées de celui-ci à travers ses microcontrôleurs ;
cette interface d'utilisateur et cette interface de télécommunication sont intégrées dans ce seul appareil informatique dédié (85), ayant plusieurs microcontrôleurs spécialisés, installés sur cet appareil ayant accès à travers un écran tactile multifonction ;
ce seul dispositif informatique dédié (85) est soit intégré soit couplé dans cet appareil de cuisson, de sorte que cet écran tactile est aménagé sur une partie avant sur une surface inclinée d'un boîtier (1) assemblé sur cette structure de base (48) de cet appareil de cuisson ; et
cet écran tactile étant pour le fonctionnement, contrôle et/ou entretien de l'appareil de cuisson y compris l'affichage de toute anomalie détectée par le microcontrôleur de l'appareil.

2. L'appareil de cuisson conformément à la revendication 1, **caractérisé en ce que** ce dispositif informatique dédié (85) interagit avec ce réseau de communication au moyen de technologie sans fils sélectionnée parmi WiFi, 3G ou Bluetooth.

3. L'appareil de cuisson conformément à la revendication 1, **caractérisé en ce qu'**il comporte une mémoire non-volatile dans laquelle ces instructions contenant des paramètres de cuisson sont stockées.

4. L'appareil de cuisson conformément à la revendication 1, **caractérisé en ce que** cette interface de communication est habilitée pour extraire des instructions contenant des paramètres de cuisson à partir d'une mémoire accessible à travers ce réseau de communication.

5. L'appareil de cuisson conformément à la revendication 1, **caractérisé en ce que** ce dispositif informatique dédié (85) comprend une fonction de reconnaissance de voix pour introduire des instructions de fonctionnement de l'appareil de cuisson.

6. L'appareil de cuisson conformément à la revendication 1, **caractérisée en ce que** ce bus de données est un bus sériel.

7. L'appareil de cuisson conformément à la revendication 1, **caractérisé en ce que** ce bus de données est un bus parallèle.

8. L'appareil de cuisson conformément à la revendication 1, **caractérisé en ce que** cette interface d'utilisateur est personnalisable.

9. L'appareil de cuisson conformément à la revendication 1 ou 8, **caractérisé en ce que** cette interface d'utilisateur est accessible au moyen d'un compte d'utilisateur et/ou un mot de passe.

10. L'appareil de cuisson conformément à la revendication 1, 3 ou 4, **caractérisé en ce que** ces instructions contenant des paramètres de cuisson peuvent être éditées par cet utilisateur, ces instructions contenant des paramètres de cuisson étant éditées, mémorisées dans cette mémoire non-volatile du dispositif informatique dédié (85) ou dans la mémoire accessible à travers le réseau de communication.
